# EUROPÄISCHE PATENTSCHRIFT

(11) **EP 2 331 228 B1**
(45) Veröffentlichungstag und Bekanntmachung des Hinweises auf die Patenterteilung: **13.08.2014**
(21) Anmeldenummer: 09783308.1
(22) Anmeldetag: 23.09.2009
(51) Int. Cl.: B01D 35/153, B01D 35/16

(54) **ENTLEERUNGSEINRICHTUNG FÜR FLUIDFILTER**
DRAINAGE DEVICE
DISPOSITIF DE VIDANGE

(30) Priorität: 10.10.2008 DE 102008051269
(43) Veröffentlichungstag der Anmeldung: 15.06.2011
(73) Patentinhaber: Mahle International GmbH, 70376 Stuttgart (DE)
(72) Erfinder: GEBLER, Claude Frédéric, 70469 Stuttgart (DE); KELLER, Thomas, 73547 Lorch-Weitmars (DE); KUNZI, Harald, 71364 Winnenden (DE)
(74) Vertreter: BRP Renaud & Partner
(86) Internationale Anmeldenummer: PCT/EP2009/062297
(87) Internationale Veröffentlichungsnummer: WO 2010/040637

(56) Entgegenhaltungen:
- EP-A- 1 087 112
- EP-A- 1 938 881
- EP-A2- 1 522 338
- WO-A-95/30856
- FR-A- 2 578 908
- US-A- 2 983 385
- US-A- 4 530 421
- US-A- 5 743 358
- US-A- 5 816 298
- US-A- 6 032 691

## Beschreibung

Die vorliegende Erfindung betrifft eine Entleerungseinrichtung für ein Fluidfilter, insbesondere für einen Kraftstoff- oder einen Ölfilter. Die Erfindung betrifft außerdem eine mit einer derartigen Entleerungseinrichtung ausgestattete Filtereinrichtung.

Filtereinrichtungen, insbesondere Kraftstoff- oder Ölfilter, sind in modernen Kraftfahrzeugen weit verbreitet und dienen zur Reinigung der Kraft- bzw. Schmierstoffe. Üblicherweise muss dabei von Zeit zu Zeit ein Filterelement ausgetauscht bzw. erneuert werden, um eine gleich hohe Filterwirkung gewährleisten zu können. Beim Austausch des Filterelementes muss der das Filterelement aufnehmende Filterkörper jedoch zuerst entleert werden, um ein ungewolltes Austreten des Kraft-/Schmierstoffes in die Umgebung und damit eine Kontamination derselben zuverlässig ausschließen zu können. Hierzu ist üblicherweise an einem Filtergehäuse eine Entleerungsöffnung vorgesehen, welche während des Betriebes beispielsweise von einer Verschlussschraube verschlossen ist. Zum Entleeren des Filtergehäuses wird die Verschlussschraube herausgedreht und danach ein dahinter verborgenes Ventil geöffnet. Dabei ist insbesondere darauf zu achten, dass während des Entleerungsvorganges des Filtergehäuses weder ein mit dem Austausch des Filterelementes beauftragter Arbeiter verschmutzt noch Kraft-/Schmierstoff ungewollt in die Umgebung gelangt.

Aus der EP 1 419 808 B1 ist eine Entleerungsvorrichtung für ein Fluidfilter bekannt, die nach einem Entfernen einer Verschlussschraube aus einer Entleerungsöffnung des Fluidfilters in dieselbe einsteckbar ist und in vollständig eingestecktem Zustand ein die Entleerungsöffnung verschließendes Ventil öffnet. Die Entleerungsvorrichtung ist dabei einteilig ausgebildet und lässt sich dadurch nur mit entsprechendem Geschick an der Entleerungsöffnung des Fluidfilter positionieren.

Entleerungsöffnungen mit Ventilöffner sind beispielsweise aus der WO 95 308 56 A1, US 5 816 298 A1, US 2 983 385 A1 und der FR 2 578 908 A3 bekannt.

Die vorliegende Erfindung beschäftigt sich mit dem Problem, eine verbesserte Entleerungseinrichtung anzugeben, durch welche insbesondere eine einfache und zuverlässige Entleerung eines Fluidfilters erreichbar ist.

Dieses Problem wird erfindungsgemäß durch den Gegenstand von Anspruch 1 gelöst. Vorteilhafte Ausführungsformen sind Gegenstand der abhängigen Ansprüche.

Die vorliegende Erfindung beruht auf dem allgemeinen Gedanken, eine Entleerungseinrichtung zum Entleeren eines Fluidfilters zweiteilig auszubilden, nämlich aus einer Halte-/Führungseinrichtung und einem in diese einsteckbaren Ventilöffnung. Als zu entleerendes Fluidfilter kann hierbei insbesondere ein Kraftstoff- oder ein Ölfilter in Frage kommen. Die Halte-/Führungseinrichtung der Entleerungseinrichtung weist dabei eine Durchgangsöffnung sowie einen Verbindungs- und einen Führungsbereich auf, wobei der Verbindungsbereich komplementär zu einem Innendurchmesser einer Entleerungsöffnung des Fluidfilters ausgebildet ist, so dass die Halte-/Führungseinrichtung über diesen Verbindungsbereich an der Entleerungsöffnung und damit an dem Fluidfilter fixierbar ist. Um ein passgenaues Einstecken des Ventilöffners in die Halte-/Führungseinrichtung gewährleisten zu können, ist ein Innendurchmesser des Führungsbereichs der Halte-/Führungseinrichtung komplementär zu einem Außendurchmesser des Ventilöffners ausgebildet, so dass dieser im Führungsbereich der Halte-/Führungseinrichtung zuverlässig geführt bzw. fixiert werden kann. An seinem in Einsteckrichtung vorderen Ende, weist der Ventilöffner ein Öffnungselement, beispielsweise einen Öffnungspin, auf, welches bei vollständig in die Halte-/Führungseinrichtung eingestecktem Ventilöffner die

Durchgangsöffnung der Halte-/Führungseinrichtung durchgreift und ein die Entleerungsöffnung des Fluidfilters verschließendes Ventil aufdrückt, das heißt öffnet. Im Unterschied zum Stand der Technik sieht die Erfindung somit eine zweiteilige Entleerungseinrichtung vor, bei welcher zunächst die Halte-/Führungseinrichtung, beispielsweise nach einem Entfernen einer Verschlussschraube, in die Entleerungsöffnung am Fluidfilter eingeschraubt bzw. eingesteckt werden kann. Ist die Halte-/Führungseinrichtung sicher am Filtergehäuse des Fluidfilters fixiert, kann in einem nachfolgenden Arbeitsschritt der Ventilöffner mit seinem Öffnungselement voraus in den Führungsbereich der Halte-/Führungseinrichtung eingeführt oder eingedreht werden und zwar soweit, bis das Öffnungselement das in der Entleerungsöffnung angeordnete Ventil öffnet und dadurch ein Entleeren der noch im Filtergehäuse des Fluidfilters vorhandenen Flüssigkeit ermöglicht. Durch die Halte-/Führungseinrichtung kann eine besonders exakte Ausrichtung und Führung des Ventilöffners erreicht werden, wodurch ein deutlich zuverlässigeres Öffnen des Ventils und damit Entleeren des Fluidfilters möglich ist.

Bei einer vorteilhaften Weiterbildung der erfindungsgemäßen Lösung, ist am Verbindungsbereich der Halte-/Führungseinrichtung ein Außengewinde vorgesehen, welches komplementär zu einem Innengewinde der Entleerungsöffnung des Fluidfilters ausgebildet ist. Somit kann zunächst die Verschlussschraube aus der Entleerungsöffnung herausgeschraubt werden und anschließend in gleicher Weise die Halte-/Führungseinrichtung wieder hinein. Durch das Einschrauben kann die Halte-/Führungseinrichtung exakt innerhalb der Entleerungsöffnung positioniert werden, was auch ein anschließendes exaktes Einführen des Ventilöffners ermöglicht. Zum Einschrauben der Halte-/Führungseinrichtung in die Entleerungsöffnung, sind keinerlei weitere handwerkliche Fähigkeiten erforderlich, so dass ein präzises Montieren der Halte-/Führungseinrichtung in der Entleerungsöffnung des Fluidfilters auch von ungelernten Kräften problemlos bewerkstelligt werden können.

Die Halte-/Führungseinrichtung ist über ein Verbindungselement in Art eines Filmscharniers mit dem Ventilöffner verbunden.

Bei einer vorteilhaften Weiterbildung der erfindungsgemäßen Lösung, sind an der Außenseite des Ventilöffners und/oder an der Innenseite des Führungsbereichs der Halte-/Führungseinrichtung Schneidkanten vorgesehen, welche den Ventilöffner in der Halte-/Führungseinrichtung fixieren. Die Schneidkanten bewirken dabei ein Verbeißen bzw. Verhaken des Ventilöffners im Führungsbereich der Halte-/Führungseinrichtung und damit ein zuverlässiges Fixieren desselben im Führungsbereich der Halte-/Führungseinrichtung. Derartige Schneidkanten können dabei in konstruktiv einfacher Weise, beispielsweise zusammen mit dem Ventilöffner, hergestellt werden und erfordern dadurch keinen zusätzlichen Fertigungsmehraufwand.

Bei einer weiteren vorteilhaften Ausführungsform der erfindungsgemäßen Lösung, sind an einem freien Rand des Führungsbereichs der Halte-/Führungseinrichtung Rastelemente vorgesehen, die den Ventilöffner in Einstecklage hintergreifen und fixieren. Derartige Rastelemente gleiten solange an einem Außenbereich des Ventilöffners entlang, bis dieser seine Einbaulage im Führungsbereich der Halte-/Führungseinrichtung erreicht hat. Nach Erreichen der Einbau- bzw. Einstecklage, hintergreifen die Rastelemente den Ventilöffner und sichern ihn dadurch bezüglich seiner Lage an der Halte-/Führungseinrichtung. Denkbar ist dabei selbstverständlich auch, dass der Führungsbereich zumindest zwei Axialstege aufweist, an deren Ende jeweils ein derartiges Rastelement vorgesehen ist, so dass der Führungsbereich nicht unbedingt aus einer geschlossenen Mantelfläche gebildet sein muss, sondern auch aus einzelnen axialen und damit elastischen, Stegen bestehen kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Entleerungseinrichtung in einer Schnittdarstellung,
- Fig. 2: die Entleerungseinrichtung in einer Ansicht aus der Z-Richtung,
- Fig. 3: eine in eine zugehöriges Fluidfilter eingesteckte Entleerungseinrichtung.

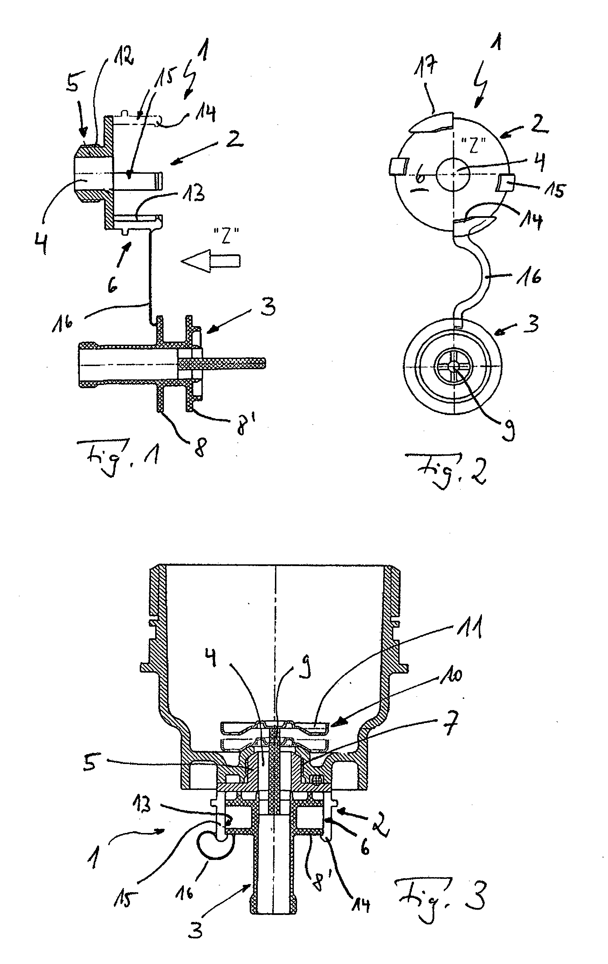

Entsprechend der Fig. 1, weist eine erfindungsgemäße Entleerungseinrichtung 1, eine Halte-/Führungseinrichtung 2 und einen in diese einsteckbaren Ventilöffner 3 auf. Die Entleerungseinrichtung 1 wird dabei zum Entleeren eines Fluidfilters, beispielsweise eines Öl- oder Kraftstofffilters, verwendet. Die Halte-/Führungseinrichtung 2 weist eine Durchgangsöffnung 4 auf, durch welche das zu entleerende Fluid ausfließen kann. Darüber hinaus weist die Halte-/Führungseinrichtung 2 einen Verbindungsbereich 5 und einen sich axial daran anschließenden Führungsbereich 6 auf. Der Verbindungsbereich 5 ist dabei üblicherweise komplementär zu einem Innendurchmesser einer Entleerungsöffnung 7 (vgl. Fig. 3) des Fluidfilters ausgebildet, so dass die Halte-/Führungseinrichtung 2 über deren Verbindungsbereich 5 in der Entleerungsöffnung 7 und damit am Fluidfilter fixierbar ist. Darüber hinaus ist ein Innendurchmesser des Führungsbereichs 6 komplementär zu einem Außendurchmesser des Ventilöffners 3 ausgebildet, so dass dieser im Führungsbereich 6 der Halte-/Führungseinrichtung 2 geführt und fixiert werden kann.

Die Führung des Ventilöffners 3 im Führungsbereich 6 der Halte-/Führungseinrichtung 2 erfolgt dabei gemäß dem dargestellten Ausführungsbeispiel in Fig. 1 über zwei Radialrippen 8 und 8'. Zusätzlich weist der Ventilöffner 3 ein Öffnungselement 9 auf, welches beispielsweise als Öffnungsstift oder Öffnungspin ausgebildet sein kann, und welches bei vollständig in die Halte-/Führungseinrichtung 2 eingestecktem Ventilöffner 3 die Durchgangsöffnung 4 der Halte-/Führungseinrichtung 2 durchgreift und ein die Entleerungsöffnung 7 des Fluidfilters verschließendes Ventil 10 (vgl. Fig. 3) aufdrückt und damit öffnet. Das Ventil 10 kann dabei in der Art eines federbeaufschlagten Ventiltellers 11 ausgebildet sein, welcher bei vollständig in die Halte-/Führungseinrichtung 2 eingestecktem Ventilöffner 3 von seinem Ventilsitz abgehoben wird und dadurch ein Entleeren des Fluidfilters ermöglicht.

Am Verbindungsbereich 5 der Halte-/Führungseinrichtung 2 kann beispielsweise ein Außengewinde 12 vorgesehen sein, welches komplementär zu einem Innengewinde der Entleerungsöffnung 7 des Fluidfilters ausgebildet ist und dadurch ein leichtes Einschrauben der Halte-/Führungseinrichtung 2 in die Entleerungsöffnung 7 ermöglicht.

Um den Ventilöffner 3 im Führungsbereich 6 der Halte-/Führungseinrichtung 2 zuverlässig fixieren bzw. führen zu können, sind an der Außenseite des Ventilöffners, das heißt insbesondere an einer Außenmantelfläche der Radialrippen 8, 8' und/oder an einer Innenseite 13 des Führungsbereichs 6 der Halte-/Führungseinrichtung 2 Schneidkanten vorgesehen. Diese Schneidkanten können ein Verzahnen bzw. Verhaken des Ventilöffners 3 im Führungsbereich 6 der Halte-/Führungseinrichtung 2 und damit ein zuverlässiges Fixieren der beiden Elemente 2 und 3 aneinander gewährleisten. Um den Ventilöffner 3 zusätzlich im Führungsbereich 6 der Halte-/Führungseinrichtung 2 fixieren zu können, kann einem freien Rand des Führungsbereichs 6 wenigstens ein Rastelement 14 vorgesehen sein, dass den Ventilöffner 3, das heißt insbesondere hier die Radialrippe 8', hintergreift und dadurch fixiert. Dabei kann der Führungsbereich 6 wie dies in der Fig. 1 gezeigt ist, aus vier Axialstegen 15 aufgebaut sein, wobei auch denkbar ist, dass der Führungsbereich 6 eine geschlossene zylindrische Mantelfläche besitzt. Durch die Aufteilung des Führungsbereichs 6 in einzelne Axialstege 15, sind diese jedoch elastischer als ein umfangsmäßig geschlossener Führungsbereich 6, wodurch ein Einstecken des Ventilöffners 3 in den Führungsbereich 6 erleichtert wird. Alternativ hierzu ist selbstverständlich auch denkbar, dass im Führungsbereich 6 der Halte-/Führungseinrichtung 2 ein Innengewinde vorgesehen ist, welches komplementär zu einem Außengewinde am Ventilöffner 3 ausgebildet ist. Das Innengewinde wäre demgemäß der Innenseite 13 des Führungsbereichs 6 angeordnet, während das Außengewinde beispielsweise an den Mantelflächen der Radialrippen 8 und 8' angeordnet ist.

Wie den Fig. 1 bis 3 zu entnehmen ist, sind die Halte-/Führungseinrichtung 2 und der Ventilöffner 3 über ein Verbindungselement 16 verliersicher miteinander verbunden. Das Verbindungselement 16 ist dabei in der Art eines aus Kunststoff ausgebildeten Filmscharniers ausgebildet sein und kann in einem einzigen Arbeitsschritt zusammen mit der Halte-/Führungseinrichtung 2 und dem Ventilöffner 3 spritztechnisch hergestellt werden. Die Länge des Verbindungselementes 16 ist dabei so gewählt, dass gemäß der Fig. 1 der Ventilöffner 3 problemlos in seine Einstecklage verdreht werden kann. Darüber hinaus kann an der Halte-/Führungseinrichtung 2 zumindest ein Griff 17 vorgesehen sein, über welchen diese in die Entleerungsöffnung 7 des Fluidfilters einsteckbar bzw. einschraubbar ist.

Das Entleeren des Fluidfilters kann sich dabei mittels der erfindungsgemäßen Entleerungseinrichtung 1 wie folgt gestalten: Zunächst wird ein Verschlusselement, beispielsweise eine Verschlussschraube, aus der Entleerungsöffnung 7 des Fluidfilters herausgedreht. Anschließend wird die Halte-/Führungseinrichtung 2 mit ihrem Verbindungsbereich 5 in die Entleerungsöffnung 7 eingesteckt bzw. eingeschraubt, woraufhin dann der Ventilöffner in den Führungsbereich 6 der Halte-/Führungseinrichtung 2 eingeschraubt bzw. eingesteckt wird. Nach Erreichen seiner Einbau- bzw. Einstecklage, öffnet der Ventilöffner 3 mittels seines Öffnungselementes 9 das Ventil 10, beispielsweise durch ein Abheben des Ventiltellers 11 von einem zugehörigen Ventilsitz, woraufhin die noch im Fluidfilter vorhandene Flüssigkeit über die Entleerungsöffnung 7 und durch die Halte-/Führungseinrichtung 2 und den Ventilöffner 3 abgelassen werden kann. Ein Entfernen der Entleerungseinrichtung 1 erfolgt dabei durch ein einfaches Herausdrehen der Halte-/Führungseinrichtung 2 aus der Entleerungsöffnung 7.

## Patentansprüche

1. Fluidfilter, insbesondere ein Kraftstoff- oder ein Ölfilter, mit einer Entleerungseinrichtung (1), die eine Halte-/Führungseinrichtung (2) und einen in diese einsteckbaren Ventilöffner (3) aufweist, wobei
- der Ventilöffner (3) ein Öffnungselement (9) aufweist, welches bei vollständig in die Halte-/Führungseinrichtung (2) eingestecktem Ventilöffner (3) eine Durchgangsöffnung (4) der Halte-/Führungseinrichtung (2) durchgreift und ein eine Entleerungsöffnung (7) des Fluidfilters verschließendes Ventil (10) öffnet,
- die Halte-/Führungseinrichtung (2) einen Verbindungsbereich (5) und einen Führungsbereich (6) aufweist,
- der Verbindungsbereich (5) komplementär zu einem Innendurchmesser einer Entleerungsöffnung (7) des Fluidfilters ausgebildet ist, so dass die Halte-/Führungseinrichtung (2) über den Verbindungsbereich (5) am Fluidfilter fixierbar ist,
- ein Innendurchmesser des Führungsbereichs (6) komplementär zu einem Außendurchmesser des Ventilöffners (3) ausgebildet ist, so dass der Ventilöffner (3) im Führungsbereich (6) der Halte-/Führungseinrichtung (2) geführt/fixiert ist und
- die Halte-/Führungseinrichtung (2) und der Ventilöffner (3) über ein Verbindungselement (16) in der Art eines Filmscharniers miteinander verbunden sind.

2. Fluidfilter nach Anspruch 1,
**dadurch gekennzeichnet,**
**dass** am Verbindungsbereich (5) der Halte-/Führungseinrichtung (2) ein Außengewinde vorgesehen ist, welches komplementär zu einem Innengewinde der Entleerungsöffnung (7) des Fluidfilters ausgebildet ist.

3. Fluidfilter nach Anspruch 2,
**dadurch gekennzeichnet,**
**dass** an der Außenseite des Ventilöffners (3) und/oder an der Innenseite (13) des Führungsbereichs (6) der Halte-/Führungseinrichtung (2) Schneidkanten vorgesehen sind, die den Ventilöffner (3) in der Halte-/Führungseinrichtung (2) fixieren.

4. Fluidfilter nach Anspruch 2 oder 3,
**dadurch gekennzeichnet,**
**dass** an einem freien Rand des Führungsbereichs (6) der Halte-/Führungseinrichtung (2) wenigstens ein Rastelement (14) vorgesehen ist, das den Ventilöffner (3) in Einstecklage hintergreift und fixiert.

5. Fluidfilter nach Anspruch 2,
**dadurch gekennzeichnet,**
**dass** am Führungsbereich (6) der Halte-/Führungseinrichtung (2) ein Innengewinde vorgesehen ist, welches komplementär zu einem Außengewinde am Ventilöffner (3) ausgebildet ist.

6. Fluidfilter nach einem der Ansprüche 2 bis 5,
**dadurch gekennzeichnet,**
**dass** der Führungsbereich (6) aus zumindest zwei Axialstegen (15) gebildet ist.

7. Fluidfilter nach einem der Ansprüche 2 bis 6,
**dadurch gekennzeichnet,**
**dass** die Halte-/Führungseinrichtung (2) und/oder der Ventilöffner (3) aus Kunststoff ausgebildet sind.

8. Fluidfilter nach einem der Ansprüche 2 bis 7,
**dadurch gekennzeichnet,**
**dass** an der Halte-/Führungseinrichtung (2) zumindest ein Griff (17) vorgesehen ist, über welchen die Halte-/Führungseinrichtung (2) in die Entleerungsöffnung (7) des Fluidfilters einsteckbar oder einschraubbar ist.

9. Fluidfilter nach einem der Ansprüche 2 bis 8,
**dadurch gekennzeichnet,**
**dass** das Öffnungselement (9) als Öffnungsstift ausgebildet ist.

## Claims

1. A fluid filter, particularly a fuel or an oil filter, having a draining apparatus (1), which has a retaining/guiding apparatus (2) and a valve opener (3) that can be plugged into the same, wherein
- the valve opener (3) has an opening element (9), which penetrates a through opening (4) of the retaining/guiding apparatus (2) when the valve opener (3) is fully plugged into the retaining/guiding apparatus (2) and opens a valve (10) closing a draining opening (7) of the fluid filter,
- the retaining/guiding apparatus (2) has a connecting region (5) and a guiding region (6),
- the connecting region (5) is constructed complementarily to an internal diameter of a draining opening (7) of the fluid filter, so that the retaining/guiding apparatus (2) can be fixed on the fluid filter by means of the connecting region (5),
- an internal diameter of the guiding region (6) is constructed complementarily to an external diameter of the valve opener (3), so that the valve opener (3) is guided/fixed in the guiding region (6) of the retaining/guiding apparatus (2), and
- the retaining/guiding apparatus (2) and the valve opener (3) are connected to one another via a connecting element (16) in the manner of a film hinge.

2. The fluid filter according to claim 1,
**characterised**
**in that** an external thread, which is constructed complementarily to an internal thread of the draining opening (7) of the fluid filter, is provided on the connecting region (5) of the retaining/guiding apparatus (2).

3. The fluid filter according to claim 2,
**characterised**
**in that** cutting edges, which fix the valve opener (3) in the retaining/guiding apparatus (2), are provided on the outer side of the valve opener (3) and/or on the inner side (13) of the guiding region (6) of the retaining/guiding apparatus (2).

4. The fluid filter according to claim 2 or 3,
**characterised**
**in that** at least one latching element (14), which engages behind and fixes the valve opener (3) in plugged-in position, is provided on a free edge of the guiding region (6) of the retaining/guiding apparatus (2).

5. The fluid filter according to claim 2,
**characterised**
**in that** an internal thread, which is constructed complementarily to an external thread on the valve opener (3), is provided on the guiding region (6) of the retaining/guiding apparatus (2).

6. The fluid filter according to one of claims 2 to 5,
**characterised**
**in that** the guiding region (6) is formed from at least two axial webs (15).

7. The fluid filter according to one of claims 2 to 6,
**characterised**
**in that** the retaining/guiding apparatus (2) and/or the valve opener (3) are constructed from plastic.

8. The fluid filter according to one of claims 2 to 7,
**characterised**
**in that** at least one handle (17), by means of which the retaining/guiding apparatus (2) can be plugged or screwed into the draining opening (7) of the fluid filter, is provided on the retaining/guiding apparatus (2).

9. The fluid filter according to one of claims 2 to 8,
**characterised**
**in that** the opening element (9) is constructed as an opening pin.

## Revendications

1. Filtre à fluide, notamment filtre à carburant ou filtre à huile, comportant un dispositif de vidage (1), qui présente un dispositif de guidage/retenue (2) et un ouvreur de soupape (3) enfichable dans celui-ci, dans lequel
- l'ouvreur de soupape (3) présente un élément d'ouverture (9), qui quand l'ouvreur de soupape (3) est complètement enfiché dans le dispositif de guidage/retenue (2) traverse une ouverture traversante (4) du dispositif de guidage/retenue (2) et ouvre une soupape (10) obturant ouverture de vidage (7) du filtre de fluide,
- le dispositif de guidage/retenue (2) présente une zone de liaison (5) et une zone de guidage (6),
- la zone de liaison (5) est réalisée de manière complémentaire à un diamètre intérieur d'une ouverture de vidage (7) du filtre à fluide, de sorte que le dispositif de guidage/retenue (2) puisse être fixé sur le filtre à fluide par l'intermédiaire de la zone de liaison (5),
- un diamètre intérieur de la zone de guidage (6) est réalisé de manière complémentaire à un diamètre extérieur de l'ouvreur de soupape (3), de telle sorte que l'ouvreur de soupape (3) soit guidé/fixé dans la zone de guidage (6) du dispositif de guidage/retenue (2) et
- le dispositif de guidage/retenue (2) et l'ouvreur de soupape (3) sont reliés l'un à l'autre par l'intermédiaire d'un élément de liaison (16) de type charnière à film.

2. Filtre à fluide selon la revendication 1,
**caractérisé en ce**
**que** sur la zone de liaison (5) du dispositif de guidage/retenue (2) un filetage extérieur est prévu, qui est réalisé de manière complémentaire à un filetage intérieur de l'ouverture de vidage (7) du filtre à fluide.

3. Filtre à fluide selon la revendication 2,
**caractérisé en ce**
**que** sur le côté extérieur de l'ouvreur de soupape (3) et/ou sur le côté intérieur (13) de la zone de guidage (6) du dispositif de guidage/retenue (2), des arêtes coupantes sont prévues, qui fixent l'ouvreur de soupape (3) dans le dispositif de guidage/retenue (2).

4. Filtre à fluide selon la revendication 2 ou 3,
**caractérisé en ce**
**que** sur un bord libre de la zone de guidage (6) du dispositif de guidage/retenue (2), au moins un élément d'encliquetage (14) est prévu, qui vient en prise par derrière et fixe l'ouvreur de soupape (3) dans la position d'enfichage.

5. Filtre à fluide selon la revendication 2,
**caractérisé en ce**
**que** sur la zone de guidage (6) du dispositif de guidage/retenue (2) un filetage intérieur est prévu, qui est réalisé de manière complémentaire à un filetage extérieur sur l'ouvreur de soupape (3).

6. Filtre à fluide selon une des revendications 2 à 5,
**caractérisé en ce**
**que** la zone de guidage (6) est formée par au moins deux gradins axiaux (15).

7. Filtre à fluide selon une des revendications 2 à 6,
**caractérisé en ce**
**que** le dispositif de guidage/retenue (2) et/ou l'ouvreur de soupape (3) sont réalisés en plastique.

8. Filtre à fluide selon une des revendications 2 à 7,
**caractérisé en ce**
**que** sur le dispositif de guidage/retenue (2) au moins une poignée (17) est prévue, par l'intermédiaire de laquelle le dispositif de guidage/retenue (2) peut être enfiché ou peut être vissé dans l'ouverture de vidage (7) du filtre à fluide.

9. Filtre à fluide selon une des revendications 2 à 8,
**caractérisé en ce**
**que** l'élément d'ouverture (9) est conçu comme une goupille d'ouverture.
